# EUROPEAN PATENT APPLICATION

(11) **EP 3 340 162 A1**
(43) Date of publication of application: **27.06.2018**
(21) Application number: 16839539.0
(22) Date of filing: 22.08.2016
(51) Int. Cl.: G06Q 50/14, G06F 17/30, G06Q 10/02

(54) **FOLLOW-AIRLINE SEARCH SYSTEM AND METHOD**

(30) Priority: 21.08.2015 KR 20150117767
(71) Applicant: FLTGRAPH CO., LTD, Seoul 06269 (KR)
(72) Inventor: KIM, Do Gyun, Yangpyeong-gun Gyeonggi-do 12506 (KR)
(74) Representative: Flügel Preissner Schober Seidel
(86) International application number: PCT/KR2016/009222
(87) International publication number: WO 2017/034250

(57) **Abstract**

Provided are a follow airline searching system and method. According to an aspect of the present disclosure, the follow airline searching system includes: an airline ticket history DB configured to store information of at least one of past airline tickets including a previously reserved airline ticket which has been reserved or searched by a past user, a ticket which has been searched, or a ticket which is being searched by the airline searching system; and a control module configured to enable a user terminal to search a target airline ticket by using and following an object airline ticket chosen by the user terminal among the at least one of the past airline tickets stored in the airline ticket history DB. The control module performs a follow searching process to enable the user terminal to search the target airline ticket by using information of a traveling place - which refers to a place a ticket holder will stay for a predetermined stay time or longer - of the object airline ticket and optionally further using information of an airline company of the object airline ticket.

## Description

### TECHNICAL FIELD

The present disclosure relates to a system and method for enabling a search or reservation of airline tickets simply and inexpensively by using past airline ticket information.

### BACKGROUND ART

Airline tickets have values that tend to vanish if not used. Thus, airline companies incessantly study how to fill the seats of flights with customers while causing customers to pay relatively expensive fares, and thus are selling the tickets under a very complex pricing plan. Because of such a complex price structures, there may be big differences in fares among the customers using seats of the same grade on the same flight and being provided with the same onboard services, and sometimes the fare of a person may happen to reach five times of the fare of another person. Thus, even personnel (e.g. an travel agent) whose job is to query and/or reserve airline tickets for customers require a fairly long period of training and work experience in order to understand the fare structures of airline tickets and to be able to efficiently reserve the tickets.

Most of conventional methods for submitting queries for the airline tickets are based on fare driven or schedule driven process. Even though these methods allow the user to easily or simply submit queries for the tickets, they are very inefficient.

In order to solve the problems of the conventional methods, the present inventors have proposed a technical concept for allowing efficient queries and reservations of the airline tickets by introducing a decision of the user in the course of submitting the queries and reserving airline tickets. Such a technical concept is disclosed in Korean patent application No. 10-2014-0016727 entitled METHOD AND SYSTEM FOR HEURISTIC AIRLINE SEARCHING. The technical ideas disclosed in the above application may be incorporated herein by reference.

As described in the previous application, a simply automated algorithm alone cannot retrieve an optimal ticket. Therefore, an efficient result in the query and/or reservation of a ticket (e.g. a retrieval and/or reservation of a ticket at a relatively low fare for the same itinerary) may require some knowhow of the user and repeated trial and errors.

Therefore, past tickets of which schedules are fixed (e.g., tickets having been searched or reserved by others, or tickets being searched or recommended by a ticket searching system) may be much valuable information for use in querying and reserving the tickets efficiently.

That is, if there exists a past ticket of which itinerary is the same as or similar to the user's desired itinerary, the user could make a reservation for a ticket by reflecting the experience and knowhow of the other person in the reservation instead of with little decision-making and without knowing relevant provisions.

Some of conventional ticket information services such as www.kayak.com and Google Flights (both of these may be trademarks) provides the user with price information (e.g., lowest price) of tickets that have been searched and/or reserved by others. However, the services do not go beyond providing the prices of tickets paid by other people in the past to visit particular destinations. Such services provides only an airline ticket of the lowest fare among the tickets reserved at a particular data, and thus the user may acquire only the fare information in the past and the corresponding tickets do not substantially affect the current search or reservation of the user. It can be said that the services merely enters the date of the ticket automatically when the user chooses a ticket while searching for a ticket on the date of the ticket.

Therefore, the user knows neither the travel sections of the ticket having been reserved for the corresponding fare nor the fare and provision for each of the travel sections. Thus, the user may know only the range of fares for particular destinations in the past, and the detailed ticket fare information is not useful or helpful for the user to search and/or reserve the ticket.

Even worse, the conventional service may not retrieve past airline tickets having enabled to travel a plurality of traveling places that the user wishes to visit, but provides just simple fare information for a simple one way or roundtrip ticket.

Thus, there is no way for the user to actively utilize the past tickets to retrieve and/or reserve a ticket for traveling according to his desired itinerary.

### DISCLOSURE OF INVENTION

### TECHNICAL PROBLEM

To solve the above problems, provided are a system and method of allowing the user to search and reserve a desired airline ticket with reference to past airline tickets such as a previously reserved airline ticket having been reserved or searched by a past user, and a ticket being searched, reserved, or recommended by a searching system.

Also, provided are a system and method actively using past tickets of another person as references, when the user establishes a complex travel plan in which a plurality of destinations or stopover places are involved, and enabling the user to travel all of the plurality of destinations or stopover places.

In particular, when a user chooses a destination, only a ticket in which the user's desired destination is the destinations of one way or simple roundtrip travel is searched according to a conventional searching system. According to the technical concept of the present disclosure, however, retrieved ticket after a search include even the tickets in which the user's desired destination is included as the stopover place in addition to the tickets of which destination or departure place is the user's desired destination.

### TECHNICAL SOLUTION

According to an aspect of an exemplary embodiment, a follow airline searching system includes: an airline ticket history DB configured to store information of at least one of past airline tickets including a previously reserved airline ticket which has been reserved or searched by a past user, a ticket which has been searched, or a ticket which is being searched by the airline searching system; and a control module configured to enable a user terminal to search a target airline ticket by using and following an object airline ticket chosen by the user terminal among the at least one of the past airline tickets stored in the airline ticket history DB. The control module performs a follow searching process to enable the user terminal to search the target airline ticket by using information of a traveling place - which refers to a place a ticket holder will stay for a predetermined stay time or longer - of the object airline ticket and optionally further using information of an airline company of the object airline ticket.

According to an aspect of another exemplary embodiment, a follow airline searching system includes: an airline ticket history DB configured to store information of at least one of past airline tickets including a previously reserved airline ticket which has been reserved or searched by a past user, a ticket which has been searched, or a ticket which is being searched by the airline searching system; an interface module configured to receive a travel condition including a condition of at least one destination from the user terminal; and an extraction module configured to extract information of at least one candidate airline ticket corresponding to the travel condition among the at least one of the past airline tickets stored in the airline ticket history DB. The extraction module extracts, as the candidate airline ticket, an airline ticket that includes all of the at least one destination as a traveling place for staying for a predetermined stay time or longer. At least one of the candidate airline ticket identified by the extraction module includes the at least one destination as a stopover-at-traveling place - which refers to the traveling place other than an outbound destination and an inbound departure place - of the candidate airline ticket.

According to another aspect of an exemplary embodiment, a follow airline searching method includes: identifying, by a follow airline searching system, an object airline ticket among information of at least one of past airline tickets including a previously reserved airline ticket which has been reserved or searched by a past user, a ticket which has been searched, or a ticket which is being searched by the airline searching system; and performing a follow searching process, by the follow airline searching system, to enable a user terminal to search a target airline ticket by using and following an identified object airline ticket. The operation of performing the follow searching process includes: performing the follow searching process, by the follow airline searching system, to enable the user terminal to search the target airline ticket by using information of a traveling place - which refers to a place a ticket holder will stay for a predetermined stay time or longer - of the object airline ticket and optionally further using information of an airline company of the object airline ticket.

According to another aspect of another exemplary embodiment, a follow airline searching method includes: storing, by a follow airline searching system, information of at least one of past airline tickets including a previously reserved airline ticket which has been reserved or searched by a past user, a ticket which has been searched, or a ticket which is being searched by the airline searching system into a airline ticket history DB; receiving a travel condition including at least one destination condition from the user terminal by the follow airline searching system; and extracting information of at least one candidate airline ticket corresponding to the travel condition, by the follow airline searching system, among the at least one of the past airline tickets stored in the airline ticket history DB. The operation of extracting information of at least one candidate airline ticket corresponding to the travel condition includes: extracting, by the follow airline searching system, an airline ticket that includes all of the at least one destination as a traveling place for staying for a predetermined stay time or longer as the candidate airline ticket. At least one of the candidate airline ticket identified by the extraction module includes at least one of the at least one destination as a stopover-at-traveling place - which refers to the traveling place other than an outbound destination and an inbound departure place - of the candidate airline ticket.

According to yet another aspect of the present disclosure, provided is a computer program stored in a computer readable storage medium to be installed in a data processing apparatus for executing the methods described above.

### ADVANTAGEOUS EFFECTS

According to an embodiment of the present disclosure, the user may reserve an airline ticket actively referring to past airline tickets by allowing the user to search the user's desired ticket by use of past airline tickets such as an airline ticket having been reserved or searched by another person, or a ticket being searched, reserved, or recommended by a searching system.

In addition, when an object airline ticket is chosen as a reference ticket by the user, not only an airline ticket having the identical schedule as the object airline ticket (i.e., the same airline ticket being the same as the object airline for each traveling section) but also an airline ticket that the user may choose to receive the schedule of the object airline in a unit of the travel section may be provided to the user. Thus, the user may search or reserve a ticket of which schedule is adjustable for a fare similar to the object airline ticket.

Also, when the user choose a destination for visiting, provided are not only a ticket including the destination chosen by the user as an actual destination of a one way or roundtrip travel but also a ticket including the destination chosen by the user as a traveling place including a stopover place. Thus, the kinds of tickets with which the user may travel becomes much larger and is diversified. Accordingly, the user may find lots of tickets that include various information of places to visit additionally while enabling the user to visit the destinations originally intended, which allows the user to design the travel more actively.

Further, the utilization of the experience and effort of another person who searched or reserved a cheap and efficient airline ticket may be understood as a collective intelligence. Such a collective intelligence facilitates the retrieval of travel information for a relatively low cost, and may stimulate travel needs and trigger new travel demand.

### DESCRIPTION OF DRAWINGS

A brief description is given for the enhancement of understanding of the accompanying drawings to be referred to in the description of the present disclosure, in which:
FIG. 1 is a schematic diagram illustrating a system for implementing a follow airline searching method according to an embodiment of the present disclosure;
FIG. 2 is a block diagram of a follow airline searching system according to an embodiment of the present disclosure; and
FIGS. 3 through 12 are screenshots of user interfaces provided to a user to for implementing a follow airline searching method according to an embodiment of the present disclosure.

### BEST MODE

While the present invention will be described in conjunction with exemplary embodiments thereof, it is to be understood that the present description is not intended to limit the present invention to those exemplary embodiments. On the contrary, the present invention is intended to cover not only the exemplary embodiments, but also various alternatives, modifications, equivalents and other embodiments that may be included within the spirit and scope of the present invention as defined by the appended claims. In the following description, detailed descriptions of known functions and components incorporated herein will be omitted in the case that the gist of the present invention is rendered unclear.

It will be understood that, although the terms "first," "second," and the like may be used herein to describe various elements, these elements should not be limited by these terms. These terms are only used to distinguish one element from another element.

The terminology used herein is for the purpose of describing particular embodiments only and is not intended to be limiting. As used herein, the singular forms "a," "an" and "the" are intended to include the plural forms as well, unless the context clearly indicates otherwise.

It will be further understood that the terms "comprise", "include", "have", and the like when used in this specification, specify the presence of stated features, integers, steps, operations, elements, components, and/or combinations thereof but do not preclude the presence or addition of one or more other features, integers, steps, operations, elements, components, and/or combinations thereof.

Also, it will be understood that, when an element is referred to as "transmitting" data to another element in this specification, the element can not only directly transmit data to another element but also indirectly transmit data to another element via at least one intervening element. In contrast, when an element is referred to as "directly transmitting" data to another element, the element can transmit the data to another element without an intervening element.

Hereinbelow, exemplary embodiments of the present disclosure will be described in more detail with reference to the accompanying drawings. The same components are designated by the same reference numerals although they are illustrated in different drawings.

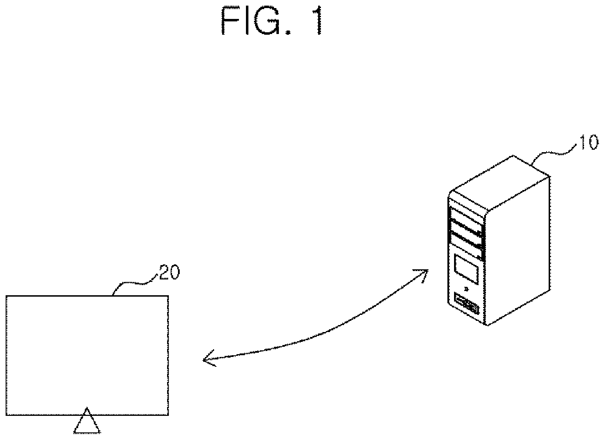

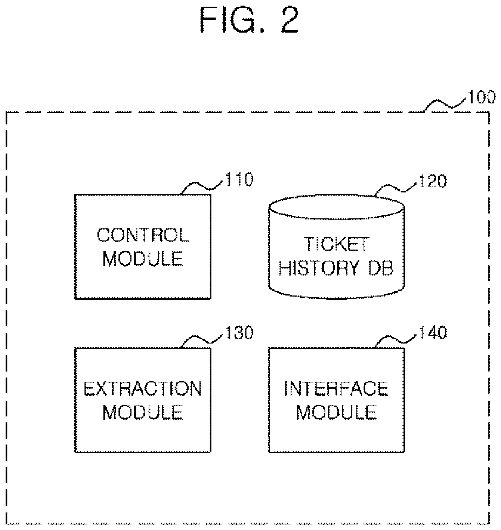

FIG. 1 is a schematic diagram illustrating a system for implementing a follow airline searching method according to an embodiment of the present disclosure, and FIG. 2 is a block diagram of a follow airline searching system according to an embodiment of the present disclosure.

Referring to FIGS. 1 and 2, a follow airline searching system 100 may implement a follow airline searching method according to an embodiment of the present disclosure. The follow airline searching system 100 may be installed and implemented in a predetermined network system (e.g., a server 10).

In other words, the follow airline searching system 100 according to an inventive concept of the present disclosure may be implemented by combining a software that performs functions of the follow airline searching system 100 and a hardware of the network system 10.

The follow airline searching system 100 can implement the technical concept of the present disclosure while communicating with a user terminal 20 through a wired or wireless network. The user terminal 20 may be defined to include any type of terminals that may be used for checking or searching and/or reserving tickets through the follow airline searching system 100. Although a desktop computer is shown in FIG. 1 as an example of the user terminal 20, any terminal capable of implementing the technical concept of the present disclosure while performing communications with the follow airline searching system 100 such as a mobile terminal and an IPTV may be used as the user terminal 20 as well. The user terminal 20 may be used by a traveler who wants to check and/or reserve a ticket as well as a person who professionally checking a ticket such as an employee of a travel agency or an airline company.

The follow airline searching system 100 enables the user terminal 20 to search past airline tickets and provides a search result to the user terminal 20. The past airline tickets may include a ticket reserved or check-completed by another person, a ticket that may be reserved or searched at a specific time, or a ticket recommended by a predetermined algorithm. In addition, the follow airline searching system 100 may perform a follow searching process with reference to a specific object ticket chosen by a user among the past airline tickets.

In this specification, the "check-completed" ticket refers to a ticket for a flight that a past user has searched a schedule and airfare to a stage of being ready for the reservation but has not been reserved.

The "searchable" ticket refers to a ticket that may be reserved for a currently available flight. The predetermined recommendation algorithm may employ at least one of various criteria such as the airfare and a total flight time, as is well known in the art.

The "follow searching process" is used herein to refer to a process performed by the search system 100 to allow the user terminal 20 to search and/or reserve an airline ticket, based on the object airline ticket, that includes all or part of an itinerary of the object airline ticket. The words "a ticket is searched" used herein may mean that information on the ticket that may be reserved by the user is provided to the user. Thus, if the ticket is searched according to the technical concept of the present disclosure, the user can reserve the searched ticket. The follow airline searching system 100 according to the technical concept of the present disclosure does not necessarily search and/or reserve a ticket of the same itinerary and airfare as the object airline ticket because it may be impossible to reserve the ticket that is the same fully or partly as the object airline ticket due to the time gap between the reservation and/or searching of the object airline ticket and a current reservation and/or searching of a target ticket at the user terminal 20. Moreover, even when the ticket of the same itinerary as the object airline ticket can be reserved, the airfare may vary depending on the situation of remaining seats. Of course, the ticket of the same itinerary and airfare as the object airline ticket may be searched and/or reserved not impossibly.

Therefore, according to the technical concept of the present disclosure, when the user terminal 20 chooses the object airline ticket from the past tickets, the follow airline searching system 100 searches for a ticket having the same itinerary as the object airline ticket or including the itinerary of the object airline ticket, so that a main reservation strategy of the object airline ticket is reflected on the search and/reservation of the target airline ticket. Here, the main reservation strategy of the object airline ticket may be a traveling place, the airline company, the airfare and/or any regulation.

To this end, once the object is determined, the follow airline searching system 100 according to the technical concept of the present disclosure may use the itinerary, the airline company, and/or a schedule of the target airline ticket.

The object airline ticket which the user have to choose for use in searching for the target airline ticket may be determined in a variety of manners. For example, the follow airline searching system 100 may provide the user with information of a plurality of past airline tickets, so that the user may choose one of the plurality of past airline tickets. The plurality of past airline tickets may be set by information such as a destination, the itinerary, the airline company, the schedule, and so on that is input by the user. Also, the plurality of past airline tickets may be tickets that have been previously searched or reserved by others, or may be tickets recommended by the follow airline searching system 100.

Alternatively, the information of the past airline tickets may be provided to the user by another person rather than the follow airline searching system 100, and one of the past airline tickets provided by the other person may become the object airline ticket. For example, the other person may transfer information of an airline ticket that he or she has reserved or deemed to be of good conditions in the airfare, itinerary, schedule, and so one to the user in various ways (e.g., by e-mail or through a messaging service). Then, the user may check the received ticket information and determine the ticket corresponding to the information as the object airline ticket when the user wishes to search or reserve an airline ticket that is the same as or similar to the corresponding ticket.

Once the object airline ticket is determined, the target airline ticket may be searched by using attributes (e.g. the itinerary, the airline company, the schedule of each flight, and the airfare) of the object airline ticket.

In the case that the itinerary of the object airline ticket is used to search for the target airline ticket, the follow airline searching system 100 may perform the follow searching process that makes the itinerary of the object airline ticket to be included in an itinerary of the target airline ticket. At this time, the follow searching process may include an operation of providing the user with a series of information and receiving a response from the user so as to include the itinerary of the object airline ticket in the itinerary of the target airline ticket if the user wants. Thus, the itinerary of the target airline ticket may not be the same as the itinerary of the object airline ticket depending on the response of the user (e.g., a choice of flight for each traveling section).

In the case that the traveling place and the schedule (i.e., the departure time of each flight) of the object airline ticket is used to search for the target airline ticket, the follow airline searching system 100 may perform the follow searching process that makes the user to choose a flight for each traveling section identified by the traveling place while allowing the user to choose a flight with a priority within a predetermined allowance day on the basis of the schedule. As a result, the user may choose the same flight as the flight chosen in the object airline ticket in a certain traveling section according to his or her choice, or choose another flight which is available within the allowance day. Of course, the follow airline searching system 100 may allow the user to choose a flight on a day beyond the allowance day. However, the follow airline searching system 100 will make the target airline ticket to be configured with flights similar to the object airline ticket, if possible, by making the user to preferentially choose a flight within the allowance day.

In the case that the airline company of the object airline ticket is used to search for the target airline ticket, the follow airline searching system 100 may selectively search airline tickets containing a flight of which fare is the same as the airline company of the object airline ticket. If the airline tickets containing the flight of the same fare as the airline company of the object airline ticket are searched, it is likely that tickets of which total fares are the same as or similar to the object airline ticket will be searched and it is more probable that tickets with the same or similar itineraries as the object airline ticket will be retrieved. Thus, if the search is limited to the airline tickets that uses the fare of the airline company and the search result is provided to the user as the candidates of the target airline ticket, it is more likely that the search result meets the intent of the user.

In any case, according to the technical concept of the present disclosure, the follow airline searching system 100 may utilize at least one of: the traveling place of the object airline ticket, the airline company, and/or the schedule whereas the conventional reservation service provides only information about a lowest price of a ticket for traveling a specific destination on a specific date and searches the airline ticket regardless of the ticket of the lowest price. Though all the information of the traveling place of the object airline ticket, the airline company, and/or the schedule may be used for the follow searching process in one example, only two of them, e.g. the traveling place of the object airline and the schedule or the airline company and the schedule may be used for the follow searching process, alternatively.

Meanwhile, according to the technical concept of the present disclosure, though the main reservation strategy of the object airline ticket is reflected to the reservation strategy of the target airline ticket as described above, the detailed reservation strategy of the target airline ticket does not necessarily depend on the target airline ticket but allows some degree of freedom. The detailed strategy may be the choice of the flight for each traveling section. The choice of the flight for each traveling section means that the user may choose the schedule (e.g., a departure date, an arrival date, a departure time, and/or an arrival time) of each of the traveling section divided by the traveling places even when the target airline ticket has exactly the same itinerary as the object airline ticket. Of course, the target airline ticket may contain more traveling places than the object airline ticket. In such a case, the user has to determine the schedule for a new traveling place autonomously. Meanwhile, depending on the choice of each flight to be included in the target airline ticket, some itinerary of the object airline ticket may not be included in the target airline ticket.

As a result, the technical concept of the present disclosure provides a series of process which allows the user to search for the object airline ticket that includes all the destinations desired by the user as the traveling places, and search and/or reserves the target airline ticket including the traveling places of the object airline ticket.

Here, the expression "the target airline ticket including the itinerary of the object airline ticket" may include a case that the target airline ticket includes the traveling place of the object airline ticket as its traveling place. Also, the term "place of traveling schedule" is used herein to refer to a stopover place where the traveler stays for a predetermined stay time (for example, 12 hours, one day, two days, etc.) or more. Accordingly, the place of traveling schedule may include a destination city of an outbound trip and a stopover place of one day or more, and may include a departure city of an inbound trip and a stopover place of one day or more. Since the stopover of an airline ticket generally refers to a staying for one day or more, the place of traveling schedule is used herein to refer to the stopover place of one day or more for convenience of explanation, but the present disclosure is not limited thereto. The stay time may be set in advance by the follow airline searching system 100 or may be designated by the user. In case that the stay time is designated by the user, the user may easily search the object airline ticket that satisfies the conditions of a desired destination and a desired stay time.

In this specification, the places other than the destination city of the outbound trip and the departure city of the inbound trip will be referred to as "stopover place."

When a user searches for a ticket that includes all the destinations desired by the user as traveling places, the follow airline searching system 100 may search tickets including even the ticket in which the user's desired destination is included as the stopover place according to the technical concept of the present disclosure while only a ticket in which the user's desired destination is the destinations of one way or simple roundtrip travel is searched according to a conventional searching system. It is desirable because, when the user wishes to visit a particular place, the particular place sometimes may not necessarily be the destination of the ticket but the user may achieve a visiting purpose by staying in the particular place for a certain period of stay time. Also, if the search result includes the tickets in which the places designated by the user are included as the stopover place as above, the number of tickets available to the user may be increased significantly, which allows the user to setup various travel strategies. For example, the user may easily identify additional places for visiting in addition to the destination originally planned by the user or change the time period of stay at each traveling place while reserving a single ticket.

To summarize, the user may check the traveling place, and then search the target airline ticket using the traveling place, the airline company, and/or the schedule of the object airline ticket if the user wishes to travel with the traveling place, the airfare, and/or the schedule that is the same as or similar to the object airline ticket. In other words, the choice of the traveling place and the estimation of traveling costs which are the most important factors for a travel plan may be done by a choice of the object airline ticket.

Also, the user may establish the travel plan (i.e. search and reserve the target airline ticket) by determining the detailed schedule for each travelling section through the follow searching process.

If the user chooses the object airline ticket, the follow airline searching system 100 may perform the follow searching process. As mentioned above, the follow searching process may mean the process of searching for the target airline ticket using the traveling place, the airline company, and/or the schedule, and may include a process of allowing the user terminal 20 to choose a flight for each traveling section included in the object airline ticket.

Here, each traveling section included in the object airline ticket may be distinguished based on the traveling places. The traveling places may include an outbound departure place, an outbound destination, an inbound departure place, an inbound destination, and inbound and outbound stopover-at-traveling places (i.e. stopover places for staying for a predetermined staying time, e.g. one day). The itineraries between the traveling places are referred to as traveling sections in this specification. In the case where there is no stopover place for staying for the predetermined staying time in the inbound and outbound trips or in case of a simple roundtrip, the total inbound or outbound path may be the interval.

When the user chooses a flight for each travel section, the follow airline searching system 100 may allow the user terminal 20 to choose the flight based on the flight having chosen the object airline ticket (hereinbelow, referred to as 'object select flight') for at least one travel section.

Allowing of the user terminal 20 to choose the flight based on the object select flight may include not only providing necessary information and user interfaces (Ul) for facilitating the choice of the flight being the same as the object select flight but also allowing the user to choose another flight for traveling a corresponding traveling section within predetermined allowance days (e.g. three or five days) with respect to the object select flight.

Since the user is allowed to choose the object flight or another flight within the predetermined allowance days from the object flight, the user may follow the object airline ticket for a main strategy (e.g., traveling places) of the itinerary while choosing a detailed strategy (e.g., schedules including dates and time of a traveling segment or whether to include additional traveling places) freely. At this time, information on the airfare for the same flight as the object flight, the airfare in case of choosing another flight, and/or the airfare in case where another person chooses the object flight is provided to the user terminal 20, so that the user may easily check the difference between the airfare of the object airline ticket and the airfare of the target airline ticket in the case where the user chooses a flight for a particular traveling section.

As described below in detail, the follow airline searching system 100 may show the flights within the predetermined allowance days from the object select flight for each traveling section along with basic fares (i.e. ticket prices) of the flights at a time. Thus, the present disclosure may dramatically increase user conveniences compared with a conventional system which shows the basic fare of a flight only after the user chooses the flight.

Meanwhile, the flight for each traveling section may be chosen differently from the object airline ticket. Thus, the traveling places searched by the user may be different from the traveling places of the object airline ticket. The present disclosure facilitates the search and/or reservation of the airline ticket having the traveling places being the same as the object airline ticket, but does not require that the traveling places of the final target airline ticket are actually the same as the object airline ticket.

On the other hand, the flight that the user terminal 20 may choose during the follow searching process may be a flight that uses a fare of the airline company of the object airline ticket.

There may be a large number of flights that travel on a particular travel segment. If, however, the flights that may be chosen by the user are limited to the flights of the same fare as that provided by the airline company of the object airline ticket, the flights that may be chosen by the user may be limited to a suitable range and it is likely that tickets of which total fares are the same as or similar to the object airline ticket will be retrieved. In particular, since the primary concern of the user having chosen the follow searching process to search the object airline ticket is likely to be the fare of the object airline ticket, whether the user can reserve the ticket at a fare similar to the fare of the object airline ticket may be an important factor to meet the intent and purpose of the user.

The follow airline searching system 100 may communicate with a predetermined external system (not shown) through a wired or wireless network to implement the technical concept of the present disclosure. The external system may include at least one system storing information for searching and/or reserving airline tickets. For example, the external system 300 may include an Airline Tariff Publishing Company (ATPCO), an Official Airline Guide (OAG), or a Global Distribution System (GDS), or an airline company system operated by an airline company. Also, the external system 300 may include a system that mediates information exchange necessary to implement the technical concept of the present disclosure between at least one of the system above and the follow airline searching system 100. While the user terminal 20 performs the follow reservation process, the information of real-time flight, seat status, and/or fares are acquired through the external system and provided to the user terminal 20.

Hereinbelow, the detailed configuration of the follow airline searching system 100 providing the above-described functions will be described with reference to FIG. 2.

Referring 2, the follow airline searching system 100 according to an embodiment of the present disclosure includes a control module 110 and a ticket history database (DB) 120. The follow airline searching system 100 may further include an extraction module 130 and/or an interface module 140.

The follow airline searching system 100 may have hardware resources and/or software required to implement the technical concept of the present disclosure, and does not imply a single physical component or a single device. That is, the follow airline searching system 100 may be a logical combination of hardware and/or software provided to implement the technical concept of the present disclosure. The follow airline searching system 100 may be implemented by a set of logical configurations installed in devices spaced apart, if necessary, and performing respective functions to implement the technical concept of the present disclosure. Also, the follow airline searching system 100 may mean a set of configurations separately implemented for each function or role to implement the technical concept of the present disclosure.

For example, the follow airline searching system 100 may be partially implemented in the terminal 20 and/or the external system. For instance, a particular configuration among the configurations of the follow airline searching system 100 may be installed in a distributed manner in the terminal 20 and a physical device implementing the follow airline searching system 100, so that the distributed configurations in a combination may implement the particular configuration. Similarly, some configurations of the follow airline searching system 100 may be installed to be distributed to the external system.

The term 'module' used herein may mean a functional and structural combination of hardware for performing the technical concept of the present disclosure and software for driving the hardware. For example, those having ordinary skill in the art will understand that the module may be a predetermined program code and a logical unit of hardware resource for executing the predetermined program code, and does not necessarily mean a physically connected code or a single kind of hardware.

The control module 110 may control resources and/or functions of other components such as the ticket history DB 120, the extraction module 130, and the interface module 140 of the follow airline searching system 100 for implementing the technical concept of the present disclosure.

The ticket history DB 120 may store information of a plurality of past airline tickets including past airline tickets that have been reserved or searched for by past users. The tickets having been searched for may mean the tickets for which at least the traveling places and the fares have been determined. The information of the past airline tickets stored in the airline ticket DB 120 may include the airline company, the itinerary, the traveling places, the fares, and/or the flight of each section.

The information of the past airline tickets may be information of the airline tickets that have been reserved and/or searched for through the follow airline searching system 100. To that end, the follow airline searching system 100 may provide a heuristic reservation by the user as disclosed in a previous patent application of the present applicant. According to an embodiment, the follow airline searching system 100 may receive the information of the past airline tickets from another reservation system (not shown). In any case, the ticket history DB 120 may store the information of the tickets reserved and/or searched for by other persons.

Alternatively, the information of the past airline tickets may include information of airline tickets that are automatically retrieved or recommended by the follow airline searching system 100. The information of the airline tickets automatically retrieved or recommended by the follow airline searching system 100 may be stored in the ticket history DB 120 as well.

Also, only some of the past airline tickets which are chosen by a particular user may be chosen as the past airline tickets to be provided to the user.

Then, the control module 110 performs the follow searching process which enables the follow searching of the target airline ticket as described above on the basis of the object airline ticket chosen by the user terminal 20 among the pat tickets stored in the ticket history DB 120.

The object airline ticket may be chosen by the user. According to one embodiment, the follow airline searching system 100 may provide the user terminal 20 with information on the lowest fare among the past airline tickets for each of a plurality of destinations. If the user terminal 20 choose the destination based on the provided information, the follow airline searching system 100 may determine the ticket that may be reserved and used to travel to the destination and is searched for the lowest fare as the object airline ticket. Alternatively, upon receiving a predetermined travel condition from the user terminal 20, at least one ticket (i.e., a candidate ticket) that satisfies the travel condition among the past tickets stored in the ticket history DB 120 may be extracted by the extraction module 130 and one ticket chosen by the user terminal 20 among the extracted candidate tickets may be determined as the object airline ticket.

The user terminal 20 can search for the target airline ticket using the itinerary, the airline company, and/or the schedule of the object airline ticket through the follow searching process performed by the control module 110. Of course, when the search is completed, the user terminal 20 may reserve the searched ticket.

The target airline ticket may be a ticket that includes all the traveling places of the object airline ticket as its traveling places as described above. The traveling places of the target airline ticket may be the same as those of the object airline ticket, or the traveling places of the target airline ticket may include a city not included in the traveling places of the object airline ticket. Depending on the implementation, some traveling place of the object airline ticket may not be included in the traveling places of the target airline ticket. In any case, the follow searching process carries out the process of allowing the user to retrieve the ticket with the same traveling places as the traveling places of the object airline ticket, but the final traveling places may vary depending on the choice of the flight for each travel section by the user.

Meanwhile, the follow airline searching system 100 may further include the extraction module 130. The extraction module 130 may extract information on at least one candidate ticket from the ticket history DB 120.

The control module 110 provides the user terminal 20 with information on the at least one candidate airline ticket extracted by the extraction module 130, and determine one airline ticket chosen among the candidate airline ticket by the user terminal 20 as the object airline ticket.

At this time, the extraction module 130 may receive the travel condition from the user terminal 20 through the interface module 140 to extract the at least one candidate ticket corresponding to the input travel condition from the ticket history DB 120.

The travel condition may include a departure date condition including a departure date, a travel duration condition including a travel period, and/or a destination condition including at least one destination.

In particular, in case that the destination is included in the travel condition input through the interface module 140, the extraction module 130 extracts, as the candidate airline ticket, not only the past airline ticket whose outbound destination or inbound departure place is the destination input by the user terminal 20 but also the past ticket whose stopover place includes the destination input by the user terminal 20 to provide the extracted candidate information to the user terminal 20.

That is, in case that the user chooses a destination to be included in the itinerary of the user, the destination input by the user does not necessarily have to be the final destination of the itinerary. Accordingly, the ticket including the destination input by the user as a stopover place may be extracted also as a candidate ticket according to the technical concept of the present disclosure.

Such a technical concept may be an important factor also in such a case that a plurality of destinations are included in the travel condition and a single ticket allowing the user to travel all of the plurality of destinations with the single ticket is to be chosen. Also, since the ticket including the destination input through the user terminal 20 is extracted as the candidate ticket, the tickets for traveling the destination may be diversified. That is, since the destination chosen by the user is not limited to a final destination but may be the traveling place including the destination and the stopover place, all the tickets that have a provision allowing to stay at the destination for more than a predetermined stay time (for example, one day) - and that have been reserved and/or retrieved using such a provision - may become the candidate tickets.

Thus, when at least one destination is included in the travel condition input through the interface module 140, the extraction module 130 may extract all the past tickets including the at least one destination as the traveling place from the ticket history DB 120 to identify as the candidate airline tickets.

If at least one candidate airline ticket is identified, the user terminal 20 may receive the information of the candidate airline tickets. The information of the candidate airline tickets may include information on the airline company, the traveling place, the schedule, and/or the fare of the each candidate airline ticket. The user may check the information of the candidate airline ticket through the user terminal 20, and choose a favorite airline ticket as the object airline ticket. The user may determine the choice of the object airline ticket based on the fare. Also, the user may determine the object airline ticket in consideration of additional traveling places in addition to the destination chosen by the user and the available stay time at the traveling places.

If the object airline ticket is chosen, the control module 110 may perform the follow searching process as described above. Here, the control module 110 may restrict the ticket to be searched through the follow searching process (i.e., the target airline ticket) to a ticket using the fare of the airline company of the object airline ticket. That is, the flight for each travel section which constitutes the target airline ticket and is to be chosen by the user terminal 20 may be restricted to flights that use the fare of the airline company.

This is because, as described above, the user's primary concern is the fare and the user is likely to expect that the target airline ticket may be reserved for a similar total fare as the object airline ticket and that searching of the airline tickets containing the flight of the same fare as the airline company of the object airline ticket may result in the reservation of the target airline ticket for a total fare that is the same as or similar to the object airline ticket. However, depending on the implementations, the control module 110 may perform the follow searching process in such a manner that not only the airline tickets using the fare of the airline company but also the airline tickets using the fare of another airline company may be retrieved as the target airline ticket.

The control module 110 may provide at least one candidate flight that may be chosen by the user to the user terminal 20 for each of the plurality of travel sections included in the object airline ticket to perform the follow searching process. The control module 110 may receive a select flight for each section that is chosen from at least one candidate flight for each of the plurality of travel sections. The plurality of travel sections may be distinguished based on the traveling places included in the object airline ticket as described above.

Also, the control module 110 may select at least one candidate flight based on the object select flight (i.e. the flight having been chosen in the object airline ticket) for each traveling section to provide to the user terminal 20. For example, the control module 110 may provide the at least one candidate flight for traveling a particular section within predetermined allowance days (e.g. three or five days with respect to the object select flight chosen for the particular section in the object airline ticket. Thus, it is possible to travel even in the case where the user terminal 20 cannot choose any object select flight, and on the itinerary different from the object airline ticket for the particular section. In addition, the control module 110 may provide the user terminal 20 with information on the basic fare for the at least one candidate flight to assist the user in choosing the flight. Further, the control module 110 may provide the basic fare of the object select flight, so that the user can easily check the change in the total fare when a flight other than the object select flight is chosen.

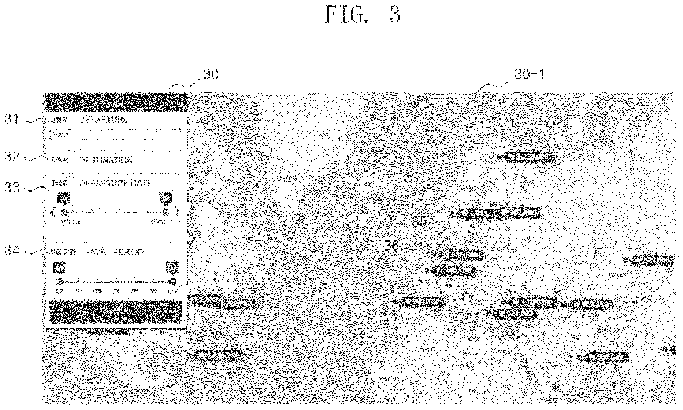

A detailed process for implementing the above-described technical idea will be described with reference to FIG. 3 through FIG. 12.

FIGS. 3 through 12 illustrate user interfaces provided to a user to for implementing a follow airline searching method according to an embodiment of the present disclosure.

Referring to FIG. 3, the interface module 140 may provide the user terminal 20 with a travel condition UI 30 as shown in FIG. 3. Also, the interface module 140 may provide a predetermined map UI 30-1 to the user terminal 20.

The user may input the travel conditions using a departure date UI 31 in the travel condition UI 30 for allowing an entry of the departure, a destination UI 32 for inputting a destination condition, a departure date UI 33 for inputting or choosing a departure date condition, and/or a travel period UI 34 for inputting or choosing a travel period condition.

If the past airline tickets corresponding to the travel conditions input through the travel condition UI 30 are extracted by the extraction module 130, the interface module 140 may overlay fares (designated with reference numerals 35 and 36) of some of the tickets (for example, tickets of the lowest fare) among the extracted past airline tickets on the predetermined map UI 30-1 to provide to the user terminal 20. The fare information 35 may represent the fare of a ticket of the lowest fare among the past tickets which satisfy the travel conditions and include a particular place (e.g., Norway) as the traveling place. The fare information 36 may represent the fare of a ticket of the lowest fare among the past tickets which satisfy the travel conditions and include another place as the traveling place.

Since the destination is not input as one of the travel conditions in the example of FIG. 3, the destination is not taken into account in the extraction of the past airline tickets. Thus, the past tickets departing from Seoul from July 2015 to June 2016 for a travel for one to twelve months are extracted, and some of them are displayed on the map UI 30-1 in a predetermined manner.

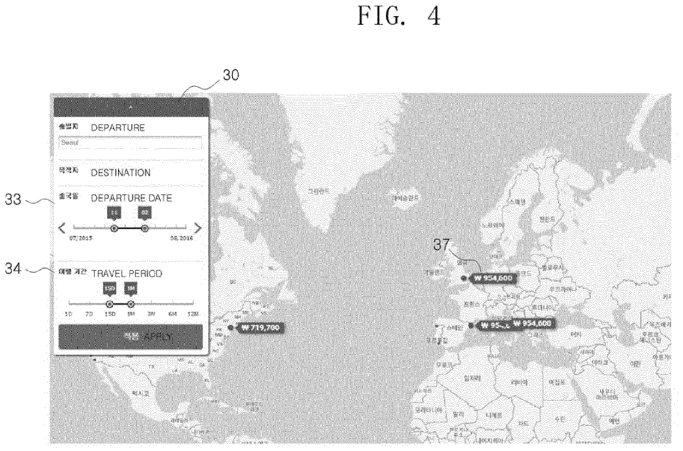

FIG. 4 shows a UI provided to the user when the travel condition is changed. As shown in FIG. 4, the user may set the departure date between November 2015 and February 2016 by using the departure date UI 33, and set the travel period to 15 days to 1 month by using the travel period UI 34.

Then, the extraction module 130 may extract the tickets satisfying the travel conditions among the past airline tickets stored in the ticket history DB 120. The interface module 140 may provide the user terminal 20 with a map overlayed with the fare (e.g., reference numeral 37) of some tickets (for example, the lowest fare ticket for each city) among the extracted past airline tickets as shown in FIG. 4.

On the other hand, the user may include at least one destination in the travel condition. The at least one destination may be input using the destination UI 32. However, according to an embodiment of the present disclosure, the user may choose the at least one destination by using the map UI 30-1 provided by the interface module 140.

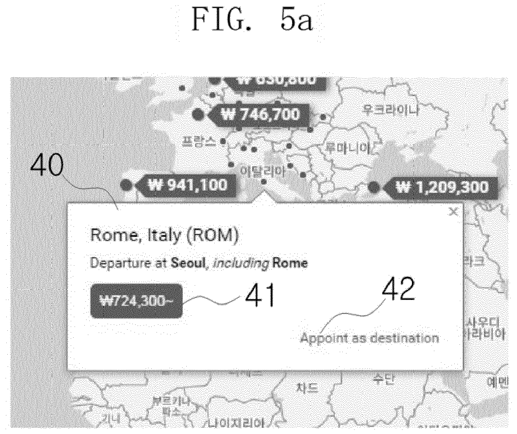

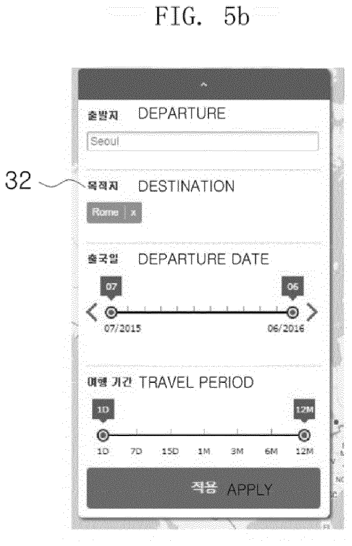

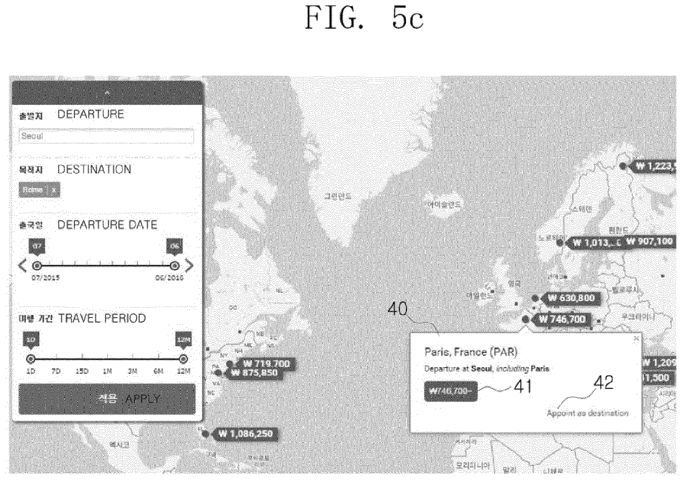

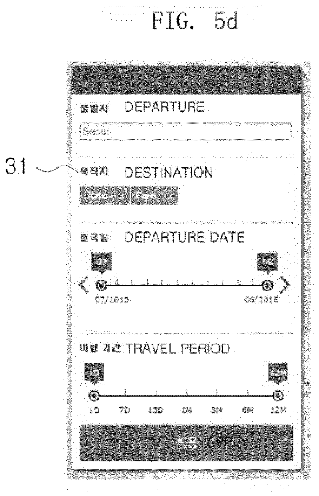

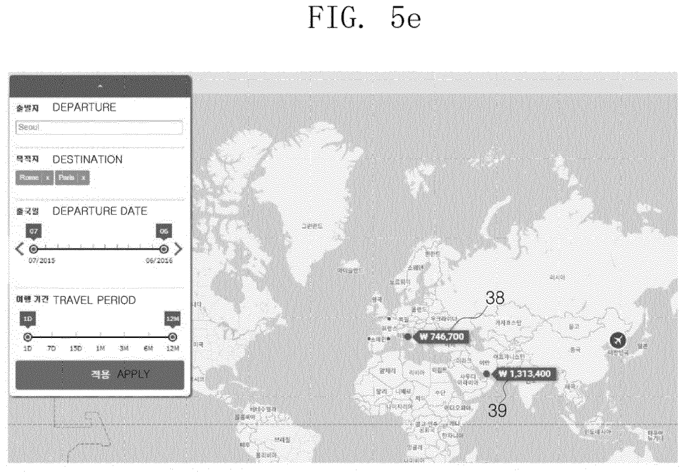

Such an embodiment is shown in FIG. 5.

For example, the user may include the destination in the travel condition in addition to the travel condition shown in FIG. 3. In such a case, the user may choose a specific city (for example, Rome of Italy) displayed on the map UI 30-1 as shown in FIG. 5A. Then, a predetermined city-specific UI 40 may be displayed by the interface module 140.

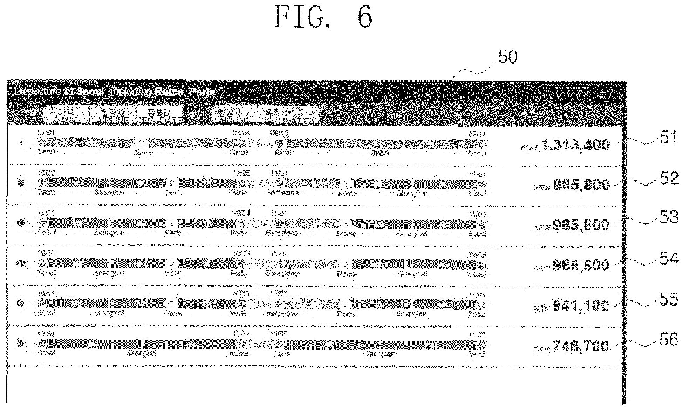

The city-specific UI 40 may show information 41 of the lowest fare among the past tickets including the city as the traveling place. If the information 41 is chosen, the ticket having the lowest fare may be chosen as the object airline ticket and the follow searching process may be performed. According to another embodiment, when the information 41 is chosen, the information of the candidate airline tickets including the particular city (i.e., Rome, Italy) as the traveling place may be provided to the user terminal 20, for example, in a manner shown in FIG. 6. Then, the user terminal 20 may choose any of the candidate airline tickets as the object airline ticket.

The city-specific UI city may include a destination setting UI 42. If the user chooses the destination setting UI 42, the particular city (e.g., Rome, Italy) may be set as the destination of the travel condition. As a result, information indicating that the particular city (e.g., Rome) is set as the destination may be displayed in the destination UI 32 as shown in FIG. 5B.

The user may wish to visit a plurality of destinations during a trip. In such case, the user may include another destination in the travel condition through the user terminal 20 in the manner as described with reference to FIG. 5A. An example of such a case is shown in FIG. 5C.

If the user chooses another city (e.g., Paris, France) on the map UI 30-1, the city-specific UI 40 corresponding to the other city (e.g., Paris) may be provided to the user terminal 20. The city-specific UI 40 may include the fare information 41 and the destination setting UI 42 as described above, and the user may select the destination setting UI 42 to add the other city (e.g., Paris) to the destinations of the travel condition. As a result, the user may find the travel condition UI 30 and the destination UI 31 as shown in FIG. 5.

If the user carries out a search request for the past airline tickets, i.e., presses the 'APPLY' button, in a state that at least one destination is included in the travel condition, all the past airline tickets containing the at least one destination as the traveling place may be extracted by the extraction module 130, and fares (e.g., reference numerals 38 and 39) for all or some of the past airline tickets may be displayed on the map UI 30-1.

The user may wish to set a ticket of which fare is low among the past airline tickets satisfying the desired travel conditions as the object airline ticket. In such a case, the user may choose the lowest fare information (e.g., reference numeral 38) among the fare information (e.g., reference numerals 38 and 39) displayed on the map UI 30-1.

Then, the control module 110 may provide the user terminal 20 with information of at least one candidate ticket as shown in FIG. 6.

As shown in FIG. 6, the control module 110 may provide a candidate ticket UI 50. The control module 110 may provide information of at least one candidate ticket (e.g., reference numerals 51-56) to the user terminal 20 through the candidate ticket UI 50. The information of each candidate ticket may include the traveling place, the schedule, the airline company, and/or the fare.

For example, the first candidate airline ticket 51 includes Dubai, Rome, and Paris as the traveling places. Among the traveling places, Rome is the destination of the outbound trip and Paris is the departure place of the inbound trip. The ticket owner would stay in Dubai for one day during the outbound trip while staying for less than one day during the inbound trip. The schedule for each travel section is included in the information of the first candidate airline ticket 51 as well. Also, the total fare of the first candidate airline ticket (for example, 1,313,400 Korean Won (KRW)) may be included in the information of the first candidate airline ticket 51. It is also possible to find the airline company of each travel section (for example, Emirates Airlines (EK)) along with the airline company operating the fare for the first candidate airline 51 (for example, EK).

In a similar fashion, the user may find information of each of the second through sixth candidate airlines 52-56.

Information of the second candidate airline 52 shows that the traveling place are Paris, Porto, Barcelona, and Rome. Though the flight travels via Shanghai during the outbound and inbound trips, Shanghai is not a traveling place. The ticket owner would stay for two days in Paris during the outbound trip and stay for two days in Rome during the inbound trip. Though the second candidate airline ticket 52 uses the fare of China Eastern Airlines (MU), it uses flights of another airline company (e.g., TAP Air Portugal (TP) and Alitalia Airlines (AZ)) in some travel sections. Also, it is also possible to find the schedule of each travel section and the total fare of the second candidate airline ticket (e.g., 965,800 KRW).

Similarly, the fifth candidate airline ticket 55 includes Paris, Porto, Barcelona, and Rome as the traveling places. Though the flight travels via Shanghai during the outbound and inbound trips, Shanghai is not a traveling place. The ticket owner would stay for two days in Paris during the outbound trip and stay for three days in Rome during the inbound trip. Though the fifth candidate airline ticket 55 uses the fare of China Eastern Airlines (MU), it uses flights of another airline company (e.g., TAP Air Portugal (TP) and Alitalia Airlines (AZ)) in some travel sections. Also, it is also possible to find the schedule of each travel section and the total fare of the fifth candidate airline ticket (e.g., 941,100 KRW).

Finally, the sixth candidate airline ticket 56 includes Rome and Paris as the traveling places. Though the flight travels via Shanghai during the outbound and inbound trips, Shanghai is not a traveling place. The sixth candidate airline ticket 56 uses the fare of China Eastern Airlines (MU). Also, it is also possible to find the schedule of each travel section and the total fare of the sixth candidate airline ticket (e.g., 746,700 KRW).

As shown in FIG. 6, each candidate airline ticket satisfies the travel condition input through the interface module 140. In particular, it can be seen that all the destinations input through the interface module 140 for the travel condition are included in the traveling places. The present disclosure extracts the past tickets containing the place desired by the user as the candidate airline tickets not only when the user's desired place is the outbound designation or the inbound departure place but also when the place is the stopover place in which the ticket owner stays for a predetermined stay time (for example, one day) or more. The present disclosure lets the user to choose one of the candidate airline tickets as the object airline ticket to perform the follow searching process based on the object airline ticket, so that the user may visit the desired places in various ways inexpensively. In particular, this advantage of the present disclosure may be greater if the user wishes to visit a plurality of destinations.

The user may check the information of the candidate airline tickets (e.g., reference numerals 51-56) shown in FIG. 6 and then choose the airline ticket, that is, the object airline ticket, that includes the traveling places and the fares that the user wishes to follow.

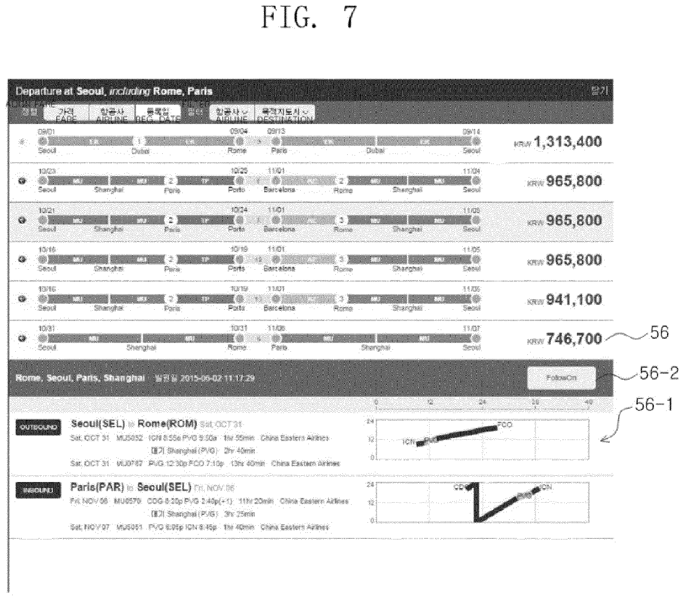

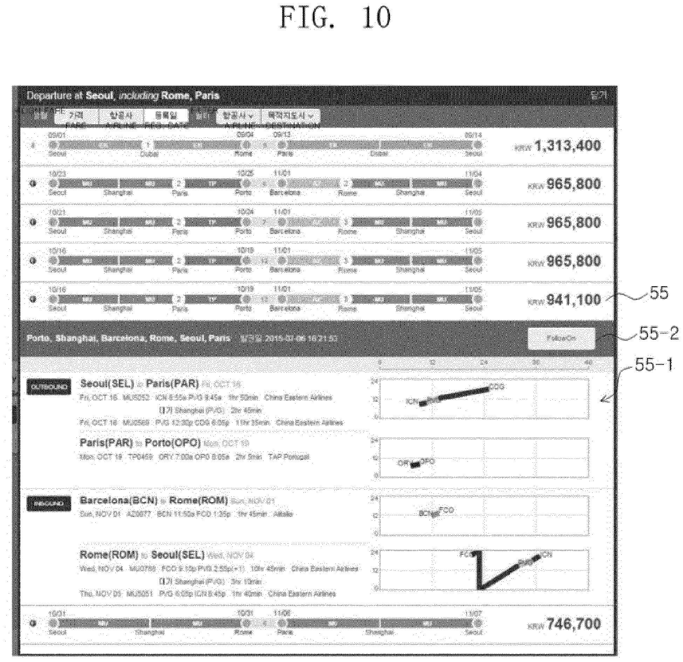

FIGS. 7 to 9 illustrate the progress of the follow searching process when the user chooses the sixth candidate ticket 56 as the object airline ticket. Also, FIGS. 10 to 12 illustrate the progress of the follow searching process when the user chooses the fifth candidate ticket 55 as the object airline ticket.

Though the user may choose the object airline ticket taking into account only the total fare, but may choose the fifth candidate airline ticket 55 of which the total fare is not cheapest as the object airline ticket because the fifth candidate airline ticket 55 allows the user to visit Porto and Barcelona in addition to the original destinations, Rome and Paris. In other words, the present disclosure gives the user a chance to change the original trip plan to visit Porto and Barcelona additionally. The present disclosure provides the user with information of a plurality of candidate tickets including the destinations chosen by the user as the traveling places, so that the main strategies (e.g., the traveling places) among the other travel strategies are reflected to the travel plan of the user and the travel plan may be redesigned adaptively based on the information of each of the candidate tickets.

The progress of the follow searching process when the user chooses the sixth candidate ticket 56 as the object airline ticket is as follows.

If the user chooses the sixth candidate airline ticket 56, predetermined Uls (e.g., reference numerals 56-1 and 56-2) may be displayed as shown in FIG. 7. The user may check the detailed information of the sixth candidate airline 56 (e.g., detailed time information for the outbound and inbound trips, the airline company information, a waiting time, and so on) along with a schedule graph showing the detailed information through the UI 56-1.

The schedule graph, of which horizontal axis represents an elapsed time and vertical axis represents a local time, assists the user to intuitively understand the schedule. The technical concept of the schedule graph is disclosed in Korean Registered Patent No. 10-1369886 issued to the present applicant and entitled "Method and system for displaying schedule", and detailed description thereof is omitted for simplicity.

The user may check the detailed information and/or the schedule graph of the sixth candidate ticket 56 through the UI 56-1, and then choose the sixth candidate ticket as the object airline ticket. For this operation, the user may select a predetermined UI 56-2.

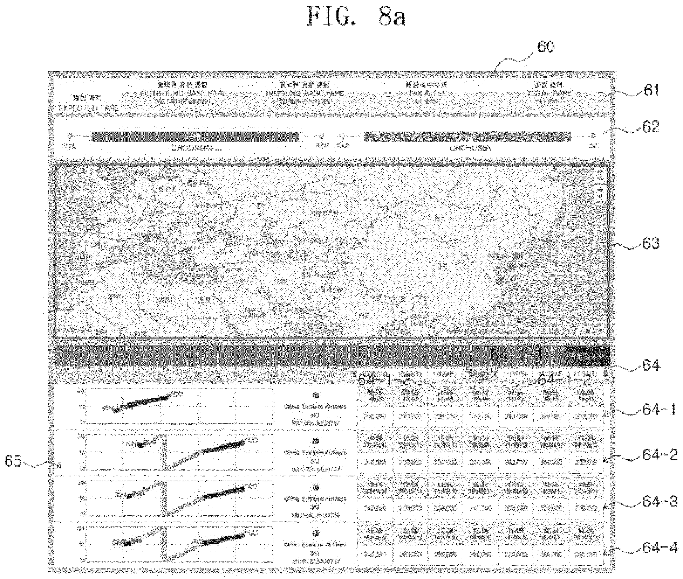

Then, the control module 110 may provide the user terminal 20 with a follow search UI 60 for each travel section shown in FIG. 8A. The follow searching UI 60 may include a fare UI 61 showing an expected fare of the target airline ticket, a status UI 62 indicating a status of search progress and the section on which the follow search is currently in progress, a section map UI 63 showing the section on which the follow search is currently in progress in a intuitive graphical form, a candidate flight UI 64 providing information of at least one candidate flights (e.g., 64-1-1, 64-1-2, 64-1-3, etc.) that can be chosen by the user on the section on which the follow search is currently in progress, and/or a graph UI 65 providing the schedule graph of each of the candidate flights.

The candidate flight UI 64 may be configured to align and display a set of the candidate flights 64-1 through 64-4 having the same schedule and different departure dates.

In FIG. 8A, the status UI 62 shows that the follow searching process is in progress on the first section from Seoul to Rome. The fare UI 61 shows that the basic outbound fare is 200,000 KRW, the basic inbound fare is 200,000 KRW also, and an expected tax and fee is at least 351,900 KRW.

The actual fare may be changed depending on which candidate flight is chosen by the user as the select flight for the corresponding section.

As described above, the control module 110 may provide the user terminal 20 with the information on the object select flight (e.g., 64-1-1) having been chosen in the object airline ticket for the first section from Seoul to Rome in a predetermined manner. Though FIG. 8A shows an example in which the object select flight (e.g., 64-1-1) is displayed in a different color from the other candidate flights, the object select flight may be indicated by another way by the control module 110 for the user terminal 20.

On the other hand, the object select flight may not be indicated in the user terminal 20 for some section. It is because the schedule of the object flight for each section chosen by the user may be different from the object select flight for each section in the object airline ticket, and if the differences are accumulated, there may not be a candidate flight that the user can choose within the predetermined allowance days with respect to the object select flight for some section. For a variety of other reasons, the candidate flights to be provided to the user terminal 20 may be determined based on another reference date (for example, a reference date determined based on the schedule of past flights and/or the travel period) for some section instead of being determined based on the object select flight.

The control module 110 may provide the user terminal 20 with the information about flight for the travel in the first section that departs within a predetermined allowance day (e.g., three days) before or after the object select flight as shown in FIG. 8A. Thus, even though the follow searching process is performed with reference to the object airline ticket, the user may make some changes to the detailed schedule while following the traveling place which is the main strategy of the object airline ticket. Also, as mentioned above, the traveling place in the object airline ticket may not become the traveling place in the target airline ticket depending on the choice of the flight. As a result, the control module 110 performs a series of processes for allowing the user to easily search for tickets having the same traveling places as the object airline ticket, but the processes does not force the search to retrieve only the tickets having the same traveling places as the object airline ticket. Also, the present disclosure allows the user to preferentially choose a flight within the allowance days from the object select flight to be the candidate flight so as to increase the possibility of reserving the target airline ticket of the fare similar to the object flight.

Also, the control module 110 may make the candidate flight(e.g., the flight 64-1-3) with a lower basic fare (e.g., 200,000 KRW) than the basic fare (e.g., 240,000 KRW) of the object select flight (e.g., the flight 64-1-1) to be distinguished from the other candidate flights as shown in FIG. 8A.

The user may choose a flight satisfying his desired schedule among the candidate flights listed in the candidate flight UI 64.

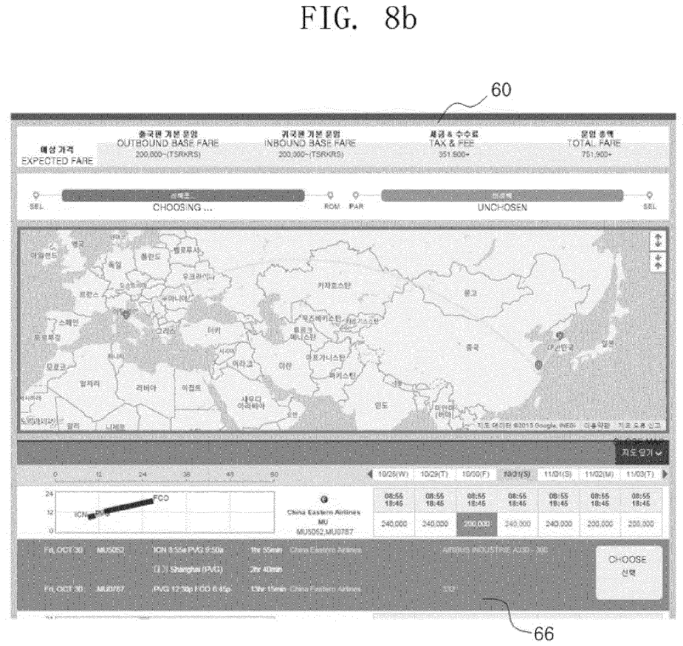

For example, the user may choose a particular flight (e.g., the flight 64-1-3) that has a low basic fare among the candidate flights provided by the control module 110 as the select flight. In other words, the user may choose a flight other than the object select flight (e.g., the flight 64-1-1) as the select flight. Then, the user terminal 20 may be provided with detailed information 66 such as a flight number, a flight time, the airline company, and a waiting time of the particular flight (e.g., the flight 64-1-3) as shown in FIG. 8B, and the user may check such information 66 and determine the particular flight (e.g., the flight 64-1-3) as the select flight of the first section from Seoul to Rome by choosing a predetermined UI (for example, 'SELECT' button).

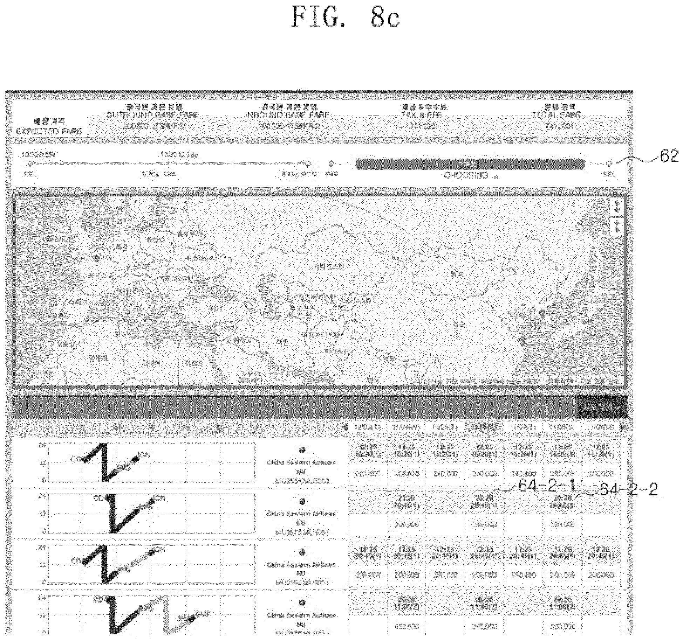

Then, the control module 110 may provide the user terminal 20 with a follow reservation UI 60 shown in FIG. 8C for a second section from Paris to Seoul to perform the follow searching process.

In FIG. 8C, the status UI 62 included in the follow reservation UI 60 shows that the follow searching for the first section from Seoul to Rome is completed and the follow searching for the second section from Paris to Seoul is in progress.

In FIG. 8C, the candidate flight UI 64 may provide information about at least one candidate flight (e.g., the flights 64-2-1, 64-2-2) as described above with reference to FIG. 8A. Also, the control module 110 provides the user terminal 20 with information of the object select flight (e.g., the flight 64-2-1) for the second section from Paris to Seoul along with the candidate flights within the predetermined allowance days from the object select flight (e.g., the flight 64-2-1) to the user terminal 20.

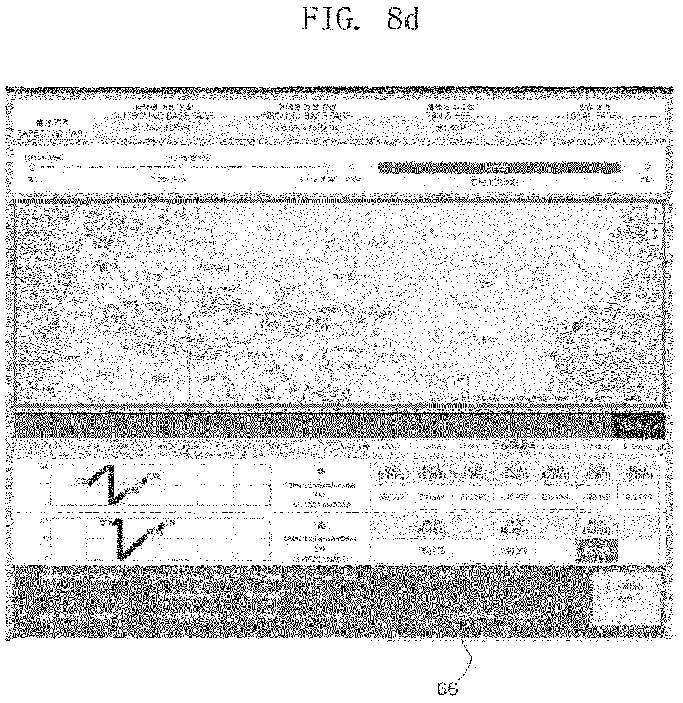

The user may choose the particular flight (e.g., a flight 64-2-2) that has a lower basic fare than the object select flight in the second section from Paris to Seoul also. Then, the detailed information 66 of the particular flight (e.g., the flight 64-2-2) shown in FIG. 8D is displayed on the user terminal 20, and the user may check the information 66 and determine the particular flight (e.g., the flight 64-2-2) as the select flight of the second section from Paris to Seoul by choosing the predetermined UI (for example, 'SELECT' button).

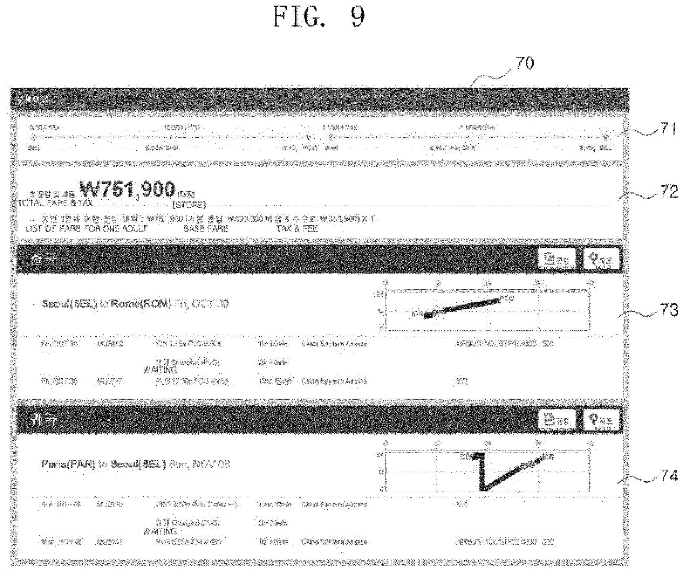

Since there is no remaining section in the object airline ticket, the control module 110 may terminate the follow searching process and provide search result information 70 shown in FIG. 9 to the user terminal 20. The search result information 70 includes information 71 of a search condition for per section, information 72 of the total fare, detailed information 73 of the outbound trip, and/or detailed information 74 of the inbound tip.

The user may check the search result information 70 and reserve the ticket searched through the predetermined UI provided by the follow airline searching system 100.

Meanwhile, a proceeding of the follow searching process when the user chooses the fifth candidate airline ticket 55 as the object airline ticket will be described as follows.

If the user chooses the fifth candidate airline ticket 55, predetermined Uls (e.g., reference numerals 55-1 and 55-2) may be displayed as shown in FIG. 10. The user may check the detailed information of the fifth candidate airline 55 (e.g., detailed time information for the outbound and inbound trips, the airline company information, a waiting time, and so on) along with a schedule graph showing the detailed information through the UI 55-1.

The user may check the detailed information and/or the schedule graph of the sixth candidate ticket 56 through the UI 55-1, and then choose the sixth candidate ticket as the object airline ticket. For this operation, the user may select a predetermined UI 55-2.

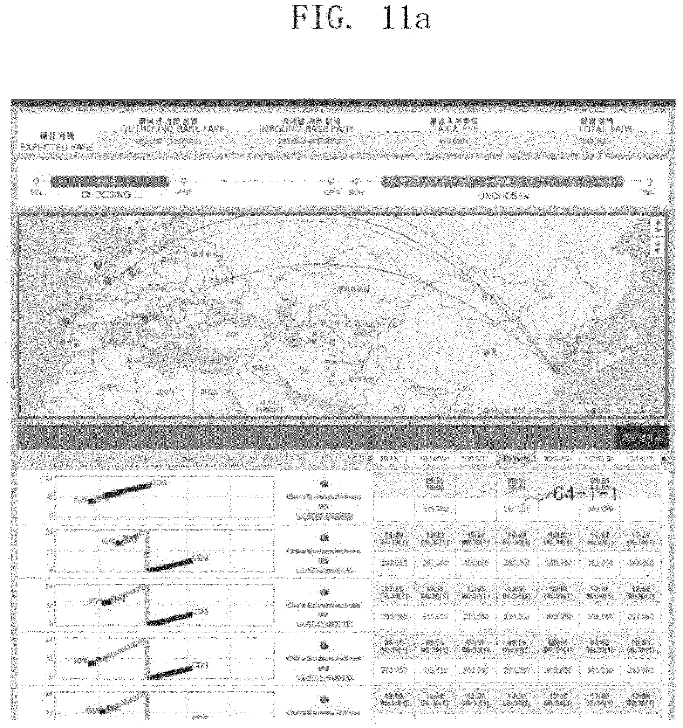

Then, the control module 110 may provide the user terminal 20 with a follow search UI for each travel section 60 shown in FIG. 11A.

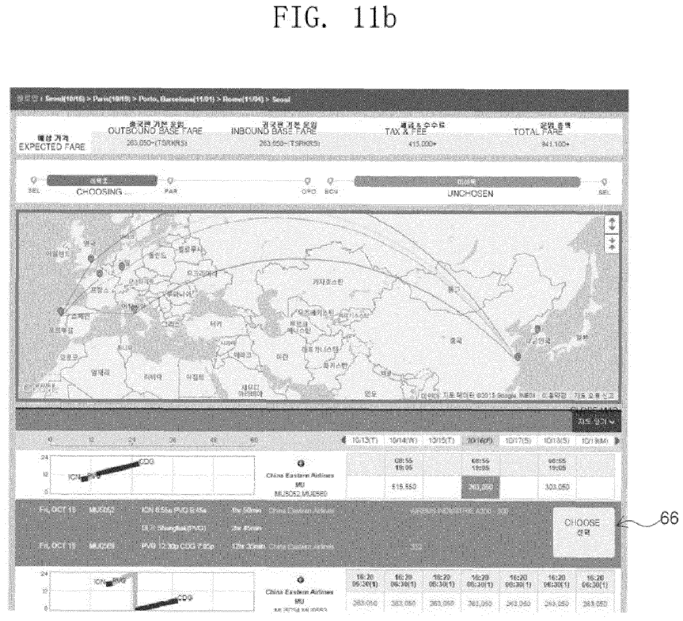

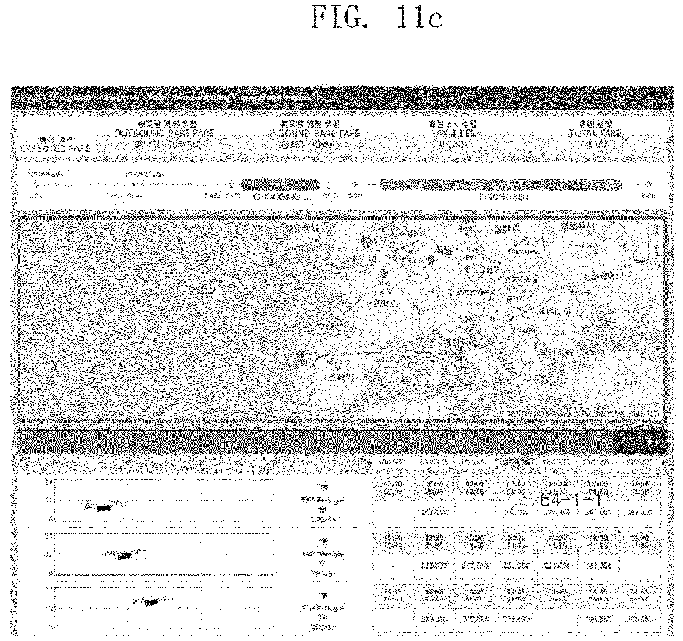

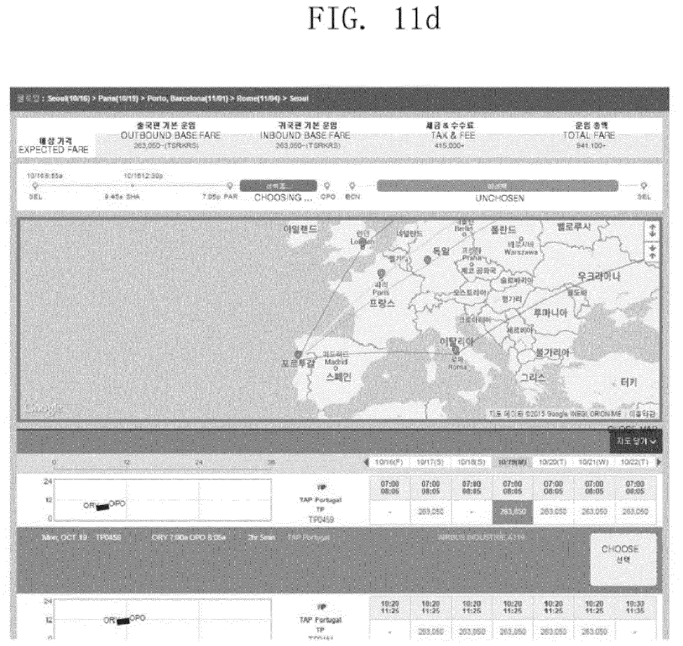

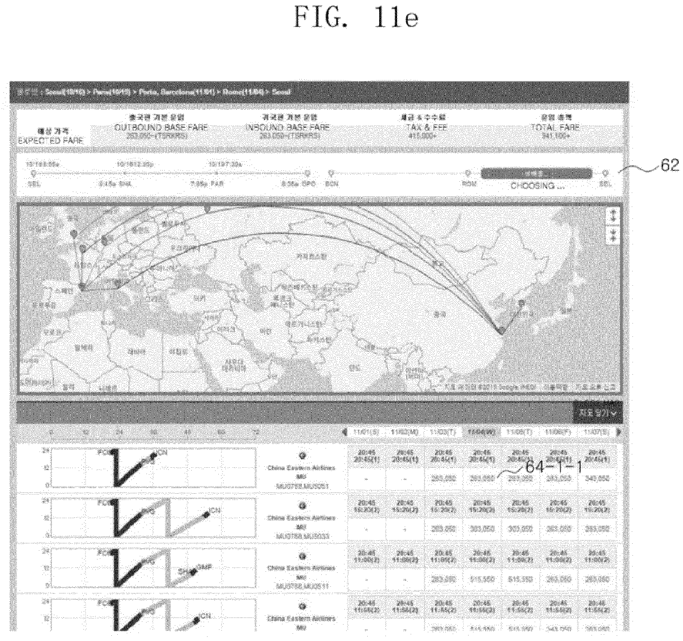

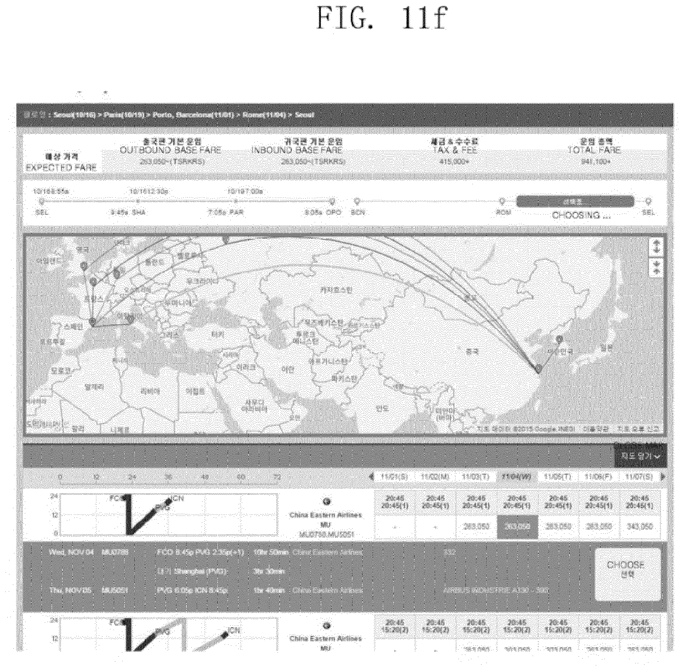

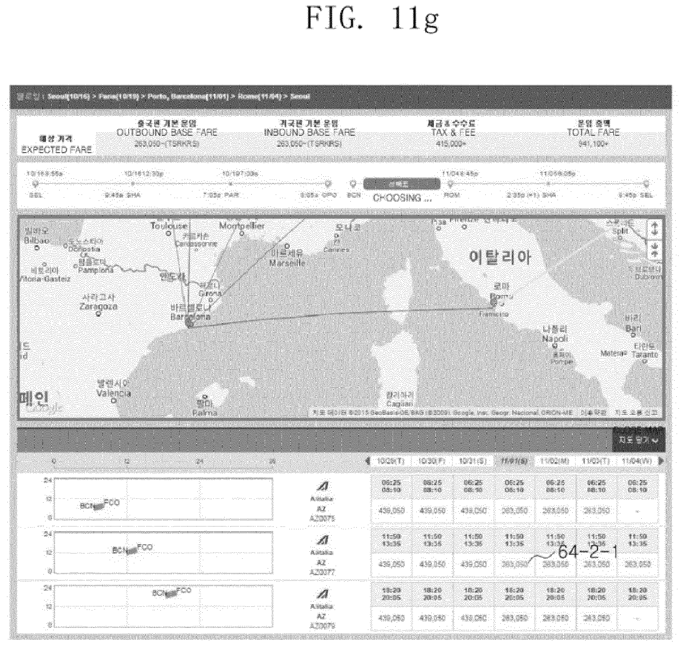

Then, the control module 110 may provide the user terminal 20 with a follow search UI 60 for each travel section shown in FIG. 11A. Since the follow search UI 60 for each travel section was described above in detail wish reference to FIG. 8, only the follow search process will be described briefly below with reference to FIG. 11.

FIG. 11A shows a UI for proceeding with the follow searching process for the first section from Seoul to Paris of the object airline ticket. The user may choose the candidate flight (e.g., the flight 64-1-1) among the candidate flights included in the candidate flight UI 64 as the select flight. In FIG. 11A, the particular flight (e.g., the flight 64-1-1) chosen by the user may be the object select flight. Of course, the basic fare when the user chooses the particular flight (e.g., the flight 64-1-1) as the select flight may be different from the basic fare and/or taxes when the object select flight have been chosen in the object airline ticket.

Then, the detailed information 66 of the particular flight (e.g., the flight 64-1-1) is displayed as shown in FIG. 11B, and the user may finally choose the particular flight (e.g., the flight 64-1-1) as the select flight for the first section from Seoul to Paris.

Next, the control module 110 may provide the user terminal 20 with the follow search UI 60 for the second section from Paris to Porto as shown in FIG. 11C, so that the follow searching process is performed for the remaining sections.

In FIG. 11C, the status UI 62 included in the follow search UI 60 shows that the follow searching for the first section from Seoul to Paris is completed and the follow searching for the second section from Paris to Porto is in progress.

In FIG. 11C, the candidate flight UI 64 may provide information about at least one candidate flight (e.g., the flight 64-1-1). The user may choose the object select flight (e.g., the flight 64-1-1) as the select flight.

The detailed information 66 of the particular flight (e.g., the flight 64-1-1) shown in FIG. 11D is displayed on the user terminal 20, and the user may check the information 66 and determine the particular flight (e.g., the flight 64-1-1) as the select flight of the second section from Paris to Porto by choosing the predetermined UI (for example, the 'SELECT' button).

Then, the user terminal 20 may be provided with detailed information 66 such as a flight number, a flight time, the airline company, and a waiting time of the particular flight (e.g., the flight 64-1-3) as shown in FIG. 8B, and the user may check such information 66 and determine the particular flight (e.g., the flight 64-1-3) as the select flight of the first section from Seoul to Rome by choosing a predetermined UI (for example, 'SELECT' button).

Then, the control module 110 may perform the follow searching process again for the other sections, which will be described with reference to FIG. 11E.

FIG. 11E shows a case of performing the follow searching process for the third section from Rome to Seoul. Here, the control module 110 preferentially performs follow searching process for a relatively long section or an intercontinental section among the remaining sections, that is, the third section from Rome to Seoul and the fourth section from Barcelona to Rome, as shown in FIG. 11E. In general, if a flight for the long section or the intercontinental section is determined first, it is easy to determine the flights for the other sections. Also, the users commonly determines the flight for the long section or the intercontinental section first. Thus, the control module 110 performs the follow searching process for the relatively long section or the intercontinental section first among the remaining sections, but the present disclosure is not limited thereto.

The user may select, as the select flight, the particular flight (e.g., the flight 64-1-1) of which basic fare (263,050 KRW) is the lowest among the candidate flights through the UI shown in FIG. 11E. Also, the control module 110 may not provide the information of the object select flight for some of the sections as shown in FIG. 11F. Then, in a state that the detailed information 66 of the particular flight (e.g., the flight 64-1-1) is displayed on the user terminal 20 shown in FIG. 11F, the user may check the information 66 and determine the particular flight (e.g., the flight 64-1-1) as the select flight of the third section from Rome to Seoul by choosing the predetermined UI (for example, 'SELECT' button).

As shown in FIG. 11G, the control module 110 may perform the follow searching process for the fourth section from Barcelona to Rome, and the user terminal 20 may determine the, as the select flight, the particular flight (e.g., the flight 64-2-1) of which basic fare (263,050 KRW) is the lowest among the candidate flights and which is the object select flight. Then, the detailed information 66 of the particular flight (e.g., the flight 64-2-1) is displayed on the user terminal 20, and the user may determine the particular flight (e.g., the flight 64-2-1) as the select flight of the fourth section from Barcelona to Rome by choosing the predetermined UI (for example, 'SELECT' button).

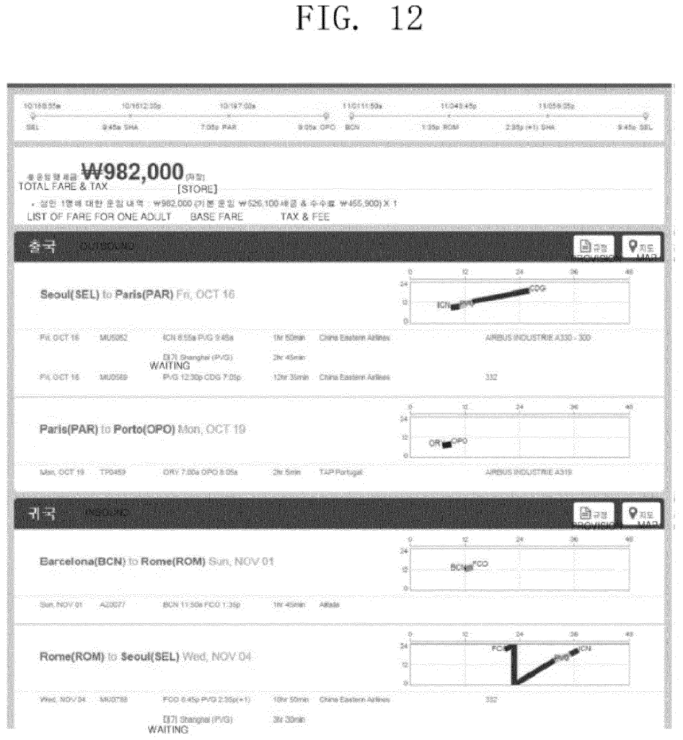

Since there is no remaining section in the object airline ticket, the control module 110 may terminate the follow searching process and provide search result information 70 shown in FIG. 12 to the user terminal 20.

Depending on the implementations, the follow airline searching system 100 may include a processor and a memory for storing a program to be executed by the processor. The processor may include a single-core CPU or a multi-core CPU. The memory may include a high speed random access memory and may include a non-volatile memory such as one or more magnetic disk storage devices, a flash memory device, or a non-volatile memory such as a non-volatile solid state memory device. Access to the memory by the processor and other components may be controlled by a memory controller. Here, the program, when being executed by a processor, may cause the follow airline searching system 100 according to the present embodiment to perform the above-described follow airline searching method.

In the meantime, the follow airline searching method according to embodiments of the present disclosure may be embodied as computer readable program instructions stored in a computer readable recording medium. A control program and an object program according to embodiments of the present disclosure may be stored in the computer readable recording medium. The computer readable recording medium includes all sorts of recording devices in which data readable by a computer system are stored.

The program instructions stored in the recording medium may be program instructions specially designed and constructed for the present disclosure or program instructions known and available to a person skilled in the field of software.

Examples of the computer readable recording medium include magnetic media, such as a hard disk, a floppy disk, and a magnetic tape; optical media, such as compact disc read only memory (CD-ROM) and a digital versatile disk; magneto-optical media, such as a floptical disk; and other hardware devices specially designed to store and execute program instructions, such as read only memory (ROM), random access memory (RAM), and flash memory. In addition, the recording medium may be in the form of light or a carrier wave that conveys signals specifying program instructions, data structures, or the like, or a transmission medium, such as a metal wire or a waveguide, through which the signals are transmitted. Furthermore, the computer readable recording medium may be distributed to computer systems connected by means of a network, in which computer readable codes are stored and executed in a decentralized manner.

Examples of the program instructions include not only machine language codes generated by compilers, but also advanced language codes that may be executed by an information processing device, for example, a computer, that electronically processes information using an interpreter.

The hardware devices described above may be constructed such that they can operate as one or more software modules for performing the operations of the present disclosure, and vice versa.

While the present disclosure has been illustrated and described with reference to the certain exemplary embodiments thereof, it will be understood by those skilled in the art that various changes in form and details may be made therein without departing from the spirit and scope of the present disclosure as defined by the appended claims. Therefore, the foregoing embodiments should be understood as being illustrative but not limitative purposes. For example, some parts described as being located in a single physical entity can be implemented as being distributed to a plurality of physical devices. In the same fashion, some parts described as being distributed to a plurality of physical devices can be located in a single physical entity.

The scope of the present disclosure is defined not by the detailed description but by the appended claims, and all modifications and alterations derived from the concept, the range, and the equivalents of the claims will be construed as being included in the scope of the present disclosure.

### INDUSTRIAL APPLICABILITY

The present disclosure may be applicable to a follow airline searching system and method.

## Claims

1. A follow airline searching system, comprising:
an airline ticket history DB configured to store information of at least one of past airline tickets including a previously reserved airline ticket which has been reserved or searched by a past user, a ticket which has been searched, or a ticket which is being searched by the airline searching system; and
a control module configured to enable a user terminal to search a target airline ticket by following an object airline ticket chosen by the user terminal among the at least one of the past airline tickets stored in the airline ticket history DB,
wherein the control module performs a follow searching process to enable the user terminal to search the target airline ticket by using information of a traveling place - which refers to a place a ticket holder will stay for a predetermined stay time or longer through thicket- of the object airline ticket and optionally further using information of an airline company of the object airline ticket.

2. The follow airline searching system of claim 1, wherein the control module performs the follow searching process to enable the user terminal to search the target airline ticket by using the traveling place of the object airline ticket, the airline company of the object airline ticket, and schedule of the object airline ticket.

3. The follow airline searching system of claim 1, further comprising:
an extraction module configured to extract information of at least one candidate airline ticket among the at least one of the past airline tickets stored in the airline ticket history DB,
wherein the control module provides the user terminal with the information of the at least one candidate airline ticket extracted by the extraction module and identifies an airline ticket chosen by the user terminal among the at least one candidate airline ticket as the object airline ticket.

4. The follow airline searching system of claim 3, further comprising:
an interface module configured to receive a travel condition from the user terminal for use in identifying the at least one candidate airline ticket,
wherein the travel condition input through interface module comprises:
a departure place,
wherein the travel condition further comprises at least one of:
a departure date condition including a departure date;
a travel period condition including a travel period; or
at least one destination.

5. The follow airline searching system of claim 4, wherein, when the travel condition comprises the at least one destination, the extraction module identifies the candidate airline ticket that includes all of the at least one destination as the traveling place,
wherein at least one of the candidate airline ticket identified by the extraction module includes at least one of the at least one destination as a stopover-at-traveling place - which refers to the traveling place other than an outbound destination and an inbound departure place - of the candidate airline ticket.

6. The follow airline searching system of claim 1, wherein the control module performs the follow searching process to follow and search an object airline ticket that uses a fare of the airline company of the object airline ticket as the target airline ticket.

7. The follow airline searching system of claim 1, wherein the control module provides the user terminal with at least one candidate flight that may be chosen by the user terminal for each of a plurality of travel sections, which are differentiated from each other based on the traveling places, included in the object airline ticket, and receives a select flight for each travel section that is chosen from the at least one candidate flight in order to perform the follow searching process.

8. The follow airline searching system of claim 7, wherein the control module provides the user terminal with the at least one candidate flight suitable for traveling a particular travel section within a predetermined allowance day with respect to an object select flight that has been chosen in the object airline ticket at the particular travel section among the plurality of travel sections.

9. The follow airline searching system of claim 7, wherein the control module provides the user terminal with a basic fare for an object select flight that has been chosen in the object airline ticket at a particular travel section among the plurality of travel sections, and a basic fare in case of selecting each of the at least one candidate flight.

10. A follow airline searching system, comprising:
an airline ticket history DB configured to store information of at least one of past airline tickets including a previously reserved airline ticket which has been reserved or searched by a past user, a ticket which has been searched, or a ticket which is being searched by the airline searching system;
an interface module configured to receive a travel condition including a condition of at least one destination from the user terminal; and
an extraction module configured to extract information of at least one candidate airline ticket corresponding to the travel condition among the at least one of the past airline tickets stored in the airline ticket history DB,
wherein the extraction module extracts, as the candidate airline ticket, an airline ticket that includes all of the at least one destination as a traveling place for staying for a predetermined stay time or longer,
wherein at least one of the candidate airline ticket identified by the extraction module includes the at least one destination as a stopover-at-traveling place - which refers to the traveling place other than an outbound destination and an inbound departure place - of the candidate airline ticket.

11. A follow airline searching method, comprising:
identifying, by a follow airline searching system, an object airline ticket among information of at least one of past airline tickets including a previously reserved airline ticket which has been reserved or searched by a past user, a ticket which has been searched, or a ticket which is being searched by the airline searching system; and
performing a follow searching process, by the follow airline searching system, to enable a user terminal to search a target airline ticket by using and following an identified object airline ticket,
wherein the operation of performing the follow searching process comprises:
performing the follow searching process, by the follow airline searching system, to enable the user terminal to search the target airline ticket by using information of a traveling place - which refers to a place a ticket holder will stay for a predetermined stay time or longer - of the object airline ticket and optionally further using information of an airline company of the object airline ticket.

12. The follow airline searching method of claim 11, wherein the operation of performing the follow searching process comprises:
performing the follow searching process, by the follow airline searching system, to enable the user terminal to search the target airline ticket by using the traveling place of the object airline ticket, the airline company of the object airline ticket, and schedule of the object airline ticket.

13. The follow airline searching method of claim 11, further comprising:
extracting information of at least one candidate airline ticket, by the follow airline searching system, among the at least one of the past airline tickets; and
providing the user terminal, by the follow airline searching system, with the information of the at least one candidate airline ticket extracted by the extraction module to identify an airline ticket chosen by the user terminal among the at least one candidate airline ticket as the object airline ticket.

14. The follow airline searching method of claim 11, further comprising:
receiving a travel condition from the user terminal, by the follow airline searching system, for use in identifying the at least one candidate airline ticket,
wherein the operation of extracting the information of the at least one candidate airline ticket comprises:
extracting at least one information of the candidate airline ticket corresponding to the travel condition.

15. The follow airline searching method of claim 13,
wherein, while performing the operation of extracting the at least one information of the candidate airline ticket, when the travel condition comprises the at least one destination, identifying the candidate airline ticket that includes all of the at least one destination as the traveling place,
wherein at least one of the candidate airline ticket identified by the extraction module includes at least one of the at least one destination as a stopover-at-traveling place - which refers to the traveling place other than an outbound destination and an inbound departure place - of the candidate airline ticket.

16. The follow airline searching method of claim 11, wherein the operation of performing the follow searching process further comprises:
provides the user terminal, by the follow airline searching system, with at least one candidate flight that may be chosen by the user terminal for each of a plurality of travel sections, which are differentiated from each other based on the traveling places, included in the object airline ticket, and receives a select flight for each travel section that is chosen from the at least one candidate flight in order to perform the follow searching process.

17. The follow airline searching method of claim 16, wherein the operation of performing the follow searching process further comprises:
provides the user terminal, by the follow airline searching system, with the at least one candidate flight suitable for traveling a particular travel section within a predetermined allowance day with respect to an object select flight that has been chosen in the object airline ticket at the particular travel section among the plurality of travel sections.

18. A follow airline searching method, comprising:
storing, by a follow airline searching system, information of at least one of past airline tickets including a previously reserved airline ticket which has been reserved or searched by a past user, a ticket which has been searched, or a ticket which is being searched by the airline searching system into a airline ticket history DB;
receiving a travel condition including at least one destination condition from the user terminal by the follow airline searching system; and
extracting information of at least one candidate airline ticket corresponding to the travel condition, by the follow airline searching system, among the at least one of the past airline tickets stored in the airline ticket history DB,
wherein the operation of extracting information of at least one candidate airline ticket corresponding to the travel condition comprises:
extracting, by the follow airline searching system, an airline ticket that includes all of the at least one destination as a traveling place for staying for a predetermined stay time or longer as the candidate airline ticket,
wherein at least one of the candidate airline ticket identified by the extraction module includes at least one of the at least one destination as a stopover-at-traveling place - which refers to the traveling place other than an outbound destination and an inbound departure place - of the candidate airline ticket.

19. A computer program stored in a computer readable storage medium to be installed in a data processing apparatus and for executing the method claimed in any one of claims 11-18.
